# DEMANDE DE BREVET EUROPEEN

(11) **EP 1 607 297 A1**
(43) Date de publication de la demande: **21.12.2005**
(21) Numéro de dépôt: 05300428.9
(22) Date de dépôt: 30.05.2005
(51) Int. Cl.: B60T 7/10, F16D 65/14

(54) **Frein de stationnement pour véhicule**

(30) Priorité: 14.06.2004 FR 0451269
(71) Demandeur: Peugeot Citroen Automobiles S.A., 78140 Vélizy Villacoublay (FR)
(72) Inventeur: BAILLEUX, François, 91400, VAL D'ALBIAN (FR)
(74) Mandataire: Fernandez, Francis Lionel

(57) **Abrégé**

Frein de stationnement pour véhicule, comprenant au moins un câble (10) de transmission d'un effort à un organe (20) de freinage de stationnement.

Selon l'invention, ledit frein comprend un moyen (220) de démultiplication de l'effort transmis par ledit câble (10), couplé audit organe (20) de freinage de stationnement.

Application à l'industrie automobile.

## Description

La présente invention concerne un frein de stationnement pour véhicule.

L'invention trouve une application particulièrement avantageuse dans le domaine de l'industrie automobile.

Les freins de stationnement actuels sont manuels et agissent en général sur les roues arrière car les câbles de transmission y sont plus faciles à implanter.

Les efforts transmis depuis la commande des câbles vers les organes de freinage de stationnement sont limités par les règlements. La course des câbles est elle-même soumise à des limitations liées à l'implantation. La fonction complète de freinage de stationnement est donc très contrainte par les efforts et les courses.

C'est pour cette raison que des dispositifs de limitation de courses ont été développés en vue d'en obtenir une réduction sensible. Ces dispositifs connus sous le nom de RA, pour Rattrapage Automatique du jeu, sont intégrés aux blocs de freinage principal, appelés aussi étriers. Le système RA compense également l'usure des plaquettes, uniquement pour la fonction frein de stationnement car pour le freinage principal le joint du piston est capable de réaliser la compensation de course, le piston étant capable de parcourir toute la course nécessaire.

L'augmentation de la masse des véhicules a obligé ces dernières années à encore augmenter le rendement en effort des mécanismes de génération d'efforts dans l'étrier : le système est alors passé d'une simple came à une came à bille (« ball in ramp » en anglo-saxon). Les frottements ont ainsi été fortement réduits.

Cependant, les efforts dans les câbles de freins de stationnement sont très importants (environ 100 daN), ce qui entraîne des pièces de fortes sections, et les arrêts de gaine sont difficiles à faire tenir en endurance. Une réduction des efforts n'est pas toutefois possible car la course serait trop longue pour l'architecture des étriers actuels ou la commande est réalisée par une bielle manivelle.

Un palonnier placé entre la poignée et les câbles équilibre les efforts sur les deux câbles et assure aussi une répartition des courses.

Enfin, une réserve élastique doit exister dans le système afin de compenser les variations de dilatation des disques en température ; une grande partie est réalisée par les gaines des câbles.

Les commandes des véhicules sont de plus en plus assistées. C'est ainsi que le freinage principal, la direction, l'ouverture des vitres et le réglage des sièges sont devenus à commande soit assistée, soit électrique.

Concernant la commande de frein de parking, qui nécessite un effort de 40kg à la poignée pour maintenir la voiture en charge dans une pente, des méthodes d'assistance du frein de stationnement ont également été proposées.

Ces méthodes consistent en un frein de stationnement électrique où la poignée de frein est remplacée par un motoréducteur qui tire sur les câbles de frein et une commande proportionnelle à l'effort ou à la course actionnée par le conducteur.

Néanmoins, on observera qu'avec ces freins de stationnement électriques connus les étriers restent inchangés, de même que les efforts sur les câbles au niveau du motoréducteur sont identiques à ceux développés dans un frein de stationnement à poignée.

Aussi, le problème technique à résoudre par l'objet de la présente invention est de proposer un frein de stationnement pour véhicule, comprenant au moins un câble de transmission d'un effort à un organe de freinage de stationnement, qui permettrait notamment de réduire les efforts appliqués au câble.

La solution au problème technique posé consiste, selon la présente invention, en ce que ledit frein comprend un moyen de démultiplication de l'effort transmis par ledit câble, couplé audit organe de freinage de stationnement.

Ainsi, la démultiplication étant déportée sur l'organe de freinage de stationnement lui-même, les câbles n'ont plus à transmettre des efforts importants, ceux-ci étant ramenés à une vingtaine de kilos, soit un gain d'un facteur 5 environ.

En conséquence, il est possible de donner aux câbles un diamètre plus faible, ils peuvent donc être moins coûteux, moins lourds et plus faciles à implanter. A titre d'exemple, le diamètre des câbles peut être identique à celui d'un câble de frein de vélo, soit à peu prés l'équivalent d'un câble électrique.

L'invention prévoit deux modes de transmission de l'effort à l'organe de freinage de stationnement.

Selon un premier mode de transmission, ledit effort est transmis au moyen de démultiplication par torsion du câble.

Selon un deuxième mode de transmission, ledit effort est transmis au moyen de démultiplication par traction du câble.

Par ailleurs, dans un mode de réalisation avantageux du frein de stationnement conforme à l'invention, ledit moyen de démultiplication est un réducteur à pignons.

Il est également prévu par l'invention que ledit organe de freinage de stationnement est une vis sans fin.

L'action de freinage de la vis sans fin peut prendre deux formes différentes.

Selon une première forme, ladite vis sans fin coopère avec un piston de frein hydraulique. Dans ce cas, la vis sans fin est intégrée à l'étrier de freinage dynamique.

Selon une autre forme d'action envisagée, ladite vis sans fin coopère par contact direct avec un moyen de freinage du véhicule, à savoir un disque par exemple. Dans ce cas, l'organe de freinage de stationnement est placé le long du disque à côté du frein hydraulique. Cette deuxième solution présente l'avantage d'éviter des joints d'étanchéité avec le liquide de frein et de permettre l'utilisation d'une plaquette de frein spécifique pour la fonction de stationnement, bénéficiant d'un coefficient de frottement adapté uniquement à la situation freinage statique.

Enfin, le frein de stationnement conforme à l'invention est prévu pour comporter un moteur électrique de commande dudit câble. Dans ce cadre, il est alors possible d'envisager que, selon l'invention, ledit moteur électrique comprend des moyens de pilotage aptes à réaliser un rattrapage automatique de jeu de l'organe de freinage.

On obtient de cette manière un déport du rattrapage de jeu de l'étrier vers le moteur de commande du câble, ce qui permet de simplifier considérablement les étriers existants en supprimant le système RA. Cet avantage contribue également à la réduction du coût du frein de stationnement selon l'invention.

La description qui va suivre en regard des dessins annexés, donnés à titre d'exemples non limitatifs, fera bien comprendre en quoi consiste l'invention et comment elle peut être réalisée.

La figure 1 est un schéma d'implantation d'un frein de stationnement conforme à l'invention.

La figure 2a est une vue de côté d'un premier mode de réalisation d'un étrier de frein comportant un organe de freinage de stationnement conforme à l'invention.

La figure 2b est une vue de côté d'un deuxième mode de réalisation d'un étrier de frein comportant un organe de freinage de stationnement conforme à l'invention.

La figure 3 est une vue de dessus d'un disque de frein comportant un organe de frein de stationnement conforme à l'invention.

Les figures 4a à 4d sont des schémas montrant des trajets possibles pour les câbles de transmission du frein de stationnement conforme à l'invention.

Les figures 5a à 5d sont des schémas de moteurs de commande de câbles de transmission.

La figure 6 est un schéma du moteur de commande de la figure 4c incluant des moyens de friction.

La figure 7 est un schéma synoptique de commande du frein de stationnement conforme à l'invention.

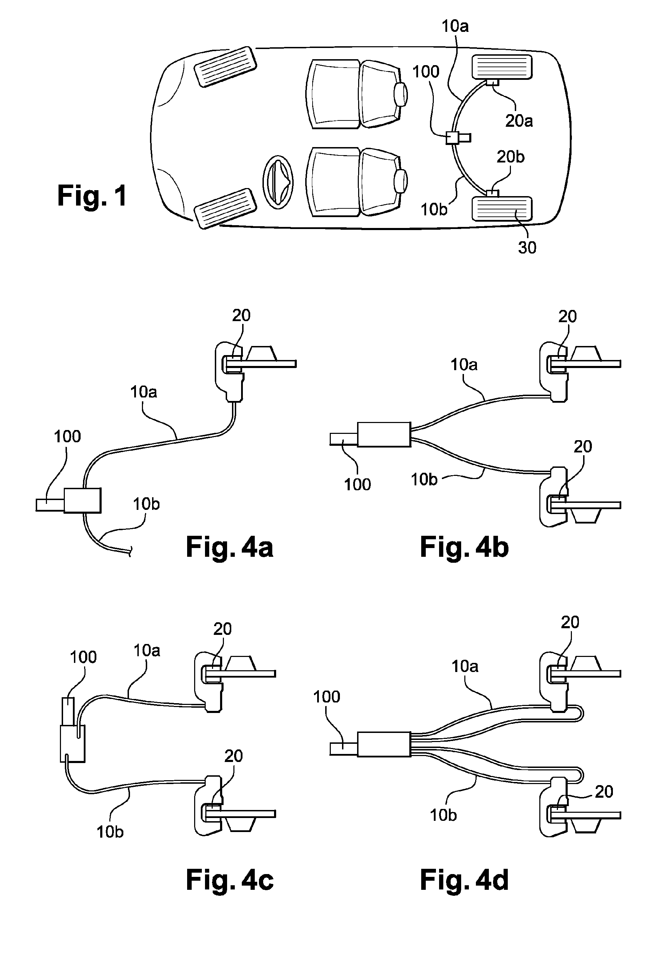

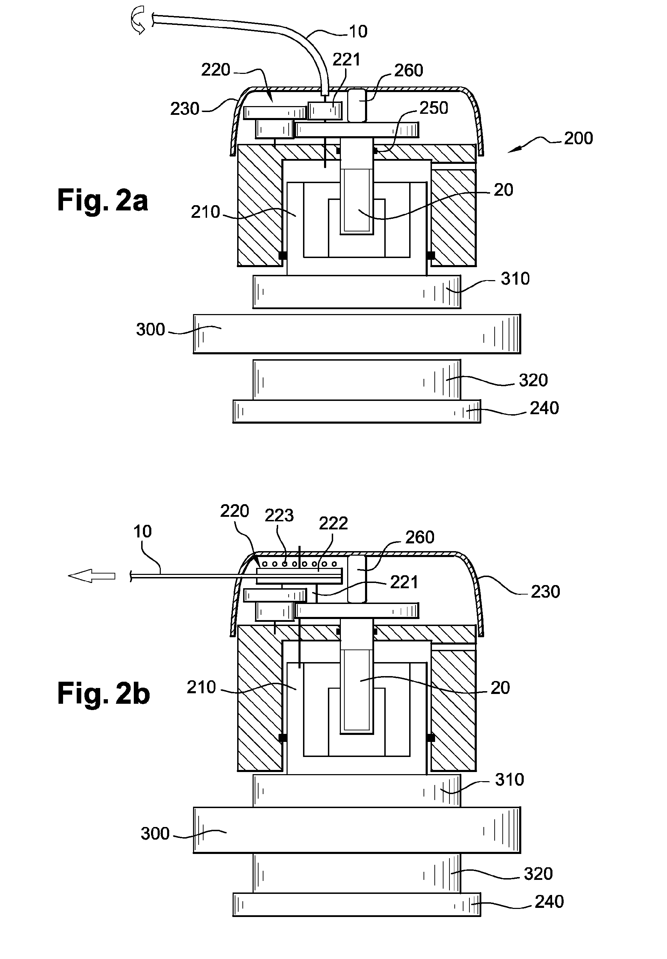

Sur la figure 1 est représenté un frein de stationnement pour un véhicule automobile comprenant deux câbles 10a, 10b destinés, chacun, à transmettre un effort à un organe 20a, 20b de freinage de stationnement couplé à une roue arrière du véhicule.

Comme le montre le mode de mise en oeuvre de particulier de la figure 1, le frein de stationnement représenté comprend un moteur électrique 100 de commande des câbles 10a, 10b de transmission d'effort.

Le moteur 100 peut être monté directement sur le train arrière 30 afin de faciliter le montage en usine, ou être monté sous le plancher, ou encore rester sur le tunnel à la place de la poignée de frein à main traditionnel.

Les figures 2a et 2b illustrent deux modes de réalisation de l'invention dans lesquels ledit organe de freinage de stationnement est une vis 20 sans fin coopérant avec le piston 210 de frein hydraulique à l'intérieur d'un étrier 200, ledit piston 210 agissant sur la plaquette 310 du disque 300 et l'autre plaquette 320 étant solidaire de la voûte 240 de l'étrier 200.

Ainsi qu'on peut le voir sur les figures 2a et 2b, la vis 20 sans fin est couplée au câble 10 par l'intermédiaire d'un moyen de démultiplication qui, dans les modes de réalisation montrés sur ces figures, est constitué par un réducteur 220 à pignons apte à démultiplier l'effort transmis par le câble 10. Il en résulte que le frein de stationnement conforme à l'invention est apte à fonctionner avec des efforts appliqués au câble sensiblement réduits par rapport aux habituels freins à commande manuelle par poignée.

Dans l'exemple de la figure 2a, le câble 10 est couplé à l'axe du premier pignon 221 du réducteur 220 par torsion du câble, tandis que dans le cas de la figure 2b le couplage entre le câble 10 et le premier pignon 221 est obtenu par traction du câble lequel est enroulé sur une poulie 222 solidaire dudit premier pignon 221.

Dans ce dernier cas de couplage par traction, il est prévu un moyen de rappel élastique en rotation de la poulie 222 constitué par le ressort 223. On obtient ainsi un effort résiduel dans le câble qui sera utilisé lors du desserrage du frein de stationnement conforme à l'invention.
De manière pratique, les premiers pignons peuvent être en matière plastique, compte tenu de la faible valeur des efforts appliqués. Les derniers pignons et la vis 20 sans fin sont de préférence réalisés en acier en raison des efforts importants en sortie et de la fiabilité demandée.

Sur les figures 2a et 2b, on peut observer la présence d'un capot 230 de fond d'étrier 200 constituant une réserve élastique pour le frein de stationnement. Le capot 230 est réalisé dans une tôle dont l'épaisseur permet d'avoir l'élasticité nécessaire recherchée ; il est relié à la vis 20 par une butée 260. Cette architecture présente l'avantage d'éviter toute élasticité dans le freinage principal, car cela augmente la course de la pédale, ce qui est à proscrire à cause de la course possible dans le maître-cylindre et de la perte d'agrément sur la pédale.

Les figures 2a et 2b se réfèrent à deux modes de réalisation où les efforts du frein de stationnement sont directement appliqués sur le piston hydraulique 210 de l'étrier 200. Selon une autre forme de réalisation représentée sur la figure 3, la vis 20 sans fin agit directement sur le disque 300 de frein à coté du piston hydraulique 210. On peut dans ce cas éviter la présence dans l'étrier 200 de joints 250 d'étanchéité avec le liquide de frein. Il est également possible de prévoir une plaquette 21 spécifique présentant un coefficient de frottement adapté à la fonction de stationnement.

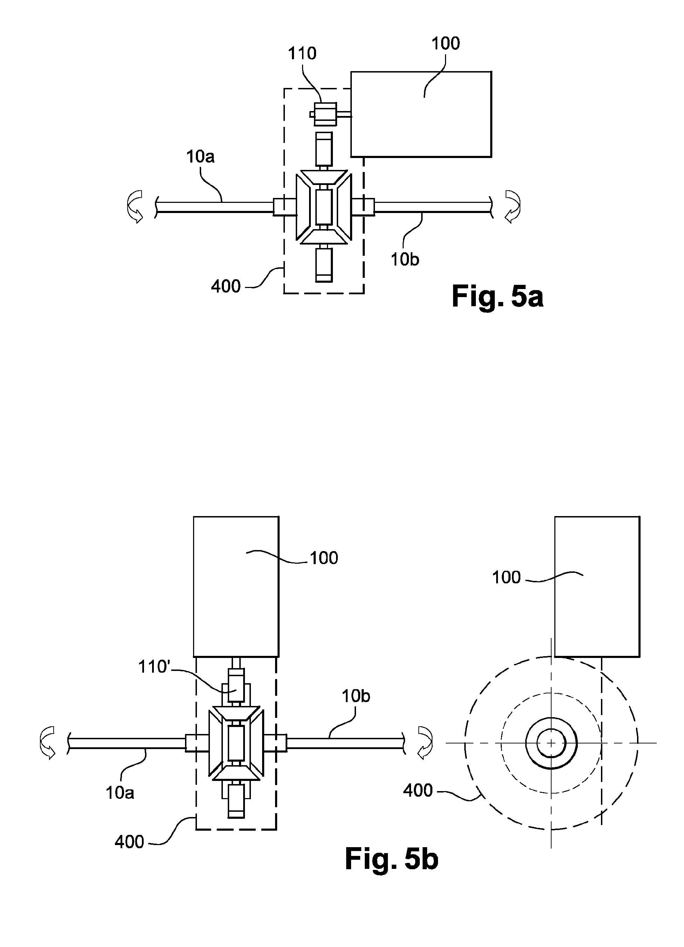

Les figures 5a à 5d montrent des exemples de réalisation dans lesquels le moteur électrique 100 commande les deux câbles 10a, 10b de transmission d'effort vers les organes de freinage d'un même essieu, comme les roues arrière du véhicule ainsi que le représente la figure 1. Plus précisément dans les cas des figures 5a à 5b, le moteur électrique 100 commande un dispositif 400 d'entraînement symétrique des deux câbles 10a, 10b constitué par un dispositif à pignons planétaires et satellites.

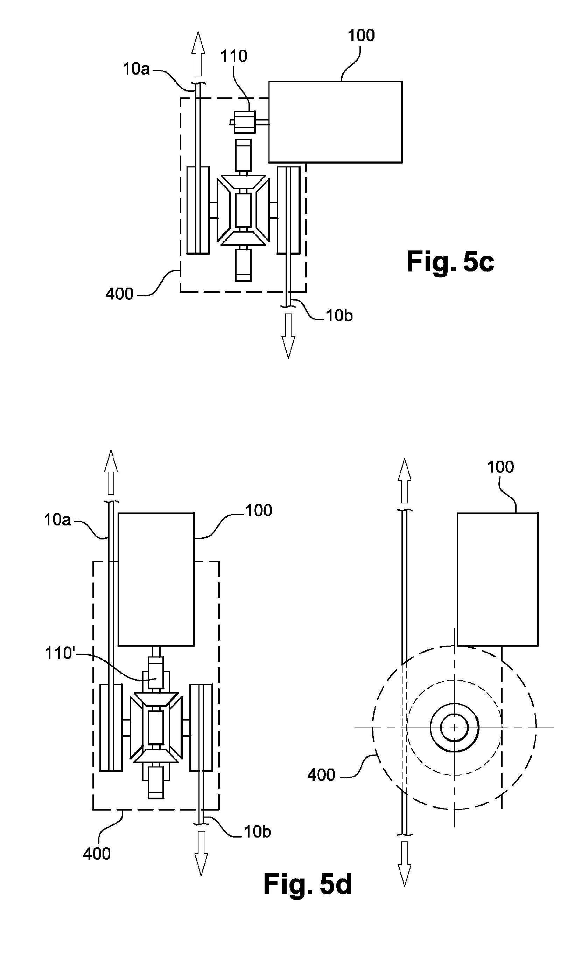

Les figures 5a et 5b, d'une part, et 5c et 5d, d'autre part, concernent les modes de réalisation de l'invention respectivement par torsion et par traction des câbles 10a, 10b.

Par ailleurs, on notera que les figures 5a et 5c, d'une part, et 5b et 5d, d'autre part, montrent des systèmes de couplage entre le moteur 100 et le dispositif 300 d'entraînement respectivement par pignon moteur 110 et par vis 110' sans fin.

Ce type d'entraînement par pignons planétaires et satellites assure une bonne répartition des couples entre les deux sorties, aussi bien au serrage qu'au desserrage du frein. Les écarts de courses sont ainsi compensés, par exemple lors du changement d'une seule plaquette de frein où un câble doit déplacer davantage la vis sans fin que l'autre.

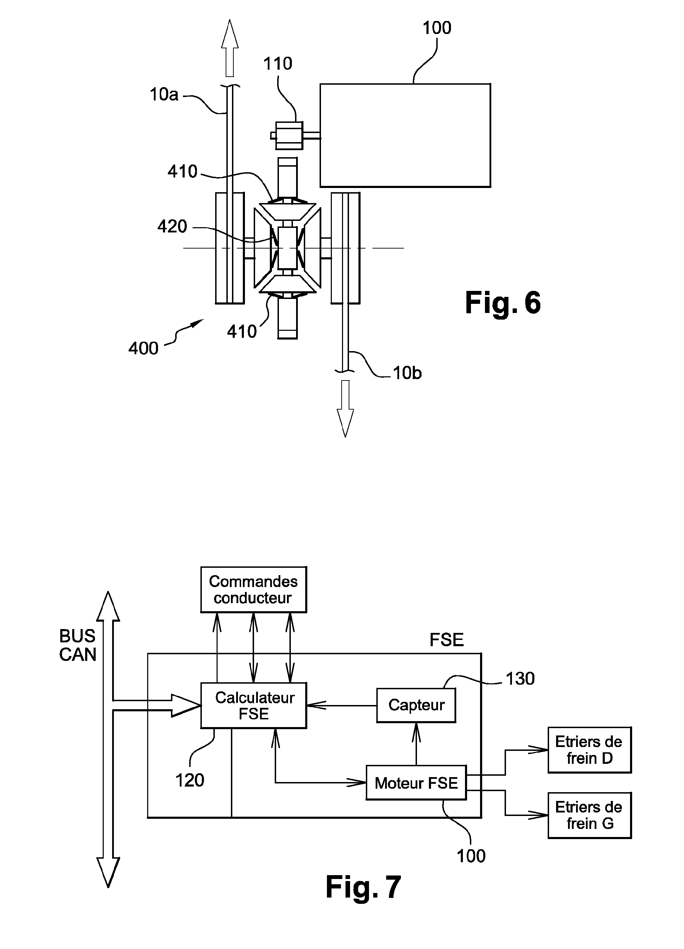

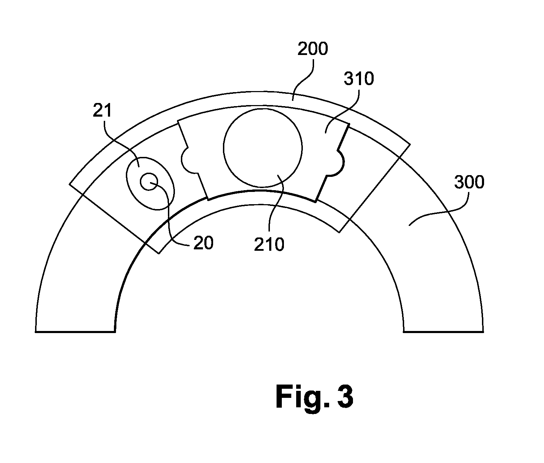

Pour garantir un équilibre des courses au desserrage, on prévoit, comme le montre la figure 6, d'introduire une friction au niveau des pignons planétaires au moyen de rondelles élastiques 410, ou par frottement 420 entre les flasques qui enroulent les câbles 10a, 10b.

Les différents montages de câbles possibles entre le moteur 100 et les organes de freinage sont illustrés sur les figures 4a à 4d.

La figure 4a montre un montage où les câbles sont en torsion, tandis que les figures 4b à 4d sont relatives à des câbles en traction.

On remarquera le mode de montage de la figure 4d où les câbles 10a, 10b font une boucle. Dans ce cas la chaîne des câbles doit présenter une certaine élasticité afin que ceux-ci soient toujours en traction.

Un avantage de l'invention déjà mentionné plus haut réside dans la suppression des rattrapes automatiques (RA) dans les étriers des freins de stationnement connus.

Dans le cadre de l'invention, cette fonction est réalisée du fait que la vis sans fin présente une course complète incluant celle de l'usure des plaquettes.

D'autre part, comme l'indique le schéma de la figure 7, un calculateur FSE (Frein de Stationnement Electrique) 120 pilotant le moteur électrique 100 analyse le courant dans le moteur et mesure sa rotation à partir d'un capteur 130, ce qui permet d'estimer les efforts et le déplacement de la vis et donc de prendre en compte le jeu des plaquettes.

## Revendications

1. Frein de stationnement pour véhicule, comprenant au moins un câble (10) de transmission d'un effort à un organe (20) de freinage de stationnement, **caractérisé en ce que** ledit frein comprend un moyen (220) de démultiplication de l'effort transmis par ledit câble (10), couplé audit organe (20) de freinage de stationnement.

2. Frein de stationnement selon la revendication 2, **caractérisé en ce que** ledit effort est transmis au moyen (220) de démultiplication par torsion du câble (10).

3. Frein de stationnement selon la revendication 2, **caractérisé en ce que** ledit effort est transmis au moyen (220) de démultiplication par traction du câble (10).

4. Frein de stationnement selon l'une quelconque des revendications 1 à 3, **caractérisé en ce que** ledit moyen de démultiplication est un réducteur (220) à pignons.

5. Frein de stationnement selon les revendications 2 et 4, **caractérisé en ce que** le câble (10) est couplé à l'axe d'un pignon (221) du réducteur (220).

6. Frein de stationnement selon les revendications 3 et 4, **caractérisé en ce que** le câble (10) est enroulé sur une poulie (222) couplée à un pignon (221) du réducteur (220).

7. Frein de stationnement selon la revendication 6, **caractérisé en ce que** ladite poulie (222) est couplée à des moyens (223) de rappel élastique en rotation.

8. Frein de stationnement selon l'une quelconque des revendications 1 à 7, **caractérisé en ce que** ledit organe de freinage de stationnement est une vis (20) sans fin.

9. Frein de stationnement selon la revendication 8, **caractérisé en ce que** ladite vis (20) sans fin coopère avec un piston (210) de frein hydraulique.

10. Frein de stationnement selon la revendication 9, **caractérisé en ce que** la vis (20) sans fin est couplée à un élément élastique (230) du frein hydraulique.

11. Frein de stationnement selon la revendication 10, **caractérisé en ce que** l'élément élastique est constitué par un capot élastique (230).

12. Frein de stationnement selon la revendication 8, **caractérisé en ce que** ladite vis (20) sans fin coopère par contact direct avec un moyen (30) de freinage du véhicule.

13. Frein de stationnement selon l'une quelconque des revendications 1 à 12, **caractérisé en ce qu'**il comporte un moteur électrique (100) de commande dudit câble (10).

14. Frein de stationnement selon la revendication 13, **caractérisé en ce que** ledit moteur électrique (100) commande deux câbles (10a,10b) de transmission d'effort, lesdits câbles étant associés à des organes de freinage de stationnement respectifs d'un même essieu du véhicule.

15. Frein de stationnement selon la revendication 14, **caractérisé en ce que** le moteur électrique (100) commande un dispositif (400) d'entraînement symétrique des deux câbles (10a,10b).

16. Frein de stationnement selon la revendication 15, **caractérisé en ce que** ledit dispositif d'entraînement symétrique est un dispositif (400) à pignons planétaires et satellites.

17. Frein de stationnement selon la revendication 16, **caractérisé en ce que** ledit dispositif (400) à pignons planétaires et satellites comprend des moyens (410,420) de friction entre pignons planétaires et/ou satellites.

18. Frein de stationnement selon l'une quelconque des revendications 13 à 17, **caractérisé en ce que** ledit moteur électrique (100) comprend des moyens (120,130) de pilotage aptes à réaliser un rattrapage automatique de jeu de l'organe de freinage.
